# EUROPÄISCHE PATENTANMELDUNG

(11) **EP 1 090 540 A2**
(43) Veröffentlichungstag der Anmeldung: **11.04.2001**
(21) Anmeldenummer: 00120881.8
(22) Anmeldetag: 26.09.2000
(51) Int. Cl.: A01C 5/06

(54) **Sävorrichtung**

(30) Priorität: 05.10.1999 DE 19947867
(71) Anmelder: Amazonen-Werke H. Dreyer GmbH & Co. KG, 49205 Hasbergen (DE)
(72) Erfinder: Dreyer, Heinz, Dr. Dipl.-Ing., 49205 Hasbergen (DE); Wiemeyer, Benno, Dipl.-Ing., 49504 Lotte (DE)

(57) **Zusammenfassung**

Sävorrichtung mit mehreren Einscheibensäscharen, deren Scharscheiben jeweils schräg zur Fahrtrichtung angestellt sind, und denen mittels Leitungen das auszubringende Material in einstellbaren Mengen zuführbar ist. Auf der Innenseite jeder Scharscheibe ist eine in Richtung der Scharscheibe leicht federbelastete Leitplatte angeordnet.

## Beschreibung

Die Erfindung betrifft eine Sävorrichtung gemäß des Oberbegriffes des Patentanspruches 1.

Eine derartige Sävorrichtung ist beispielsweise in der deutschen Patentanmeldung P 19806467.5 beschrieben.

Der Erfindung liegt die Aufgabe zugrunde, eine gute Saatgutzuführung von den Leitungen bis in den Säschlitz, der von der Scharscheibe in den Boden gezogen wird, zu erreichen.

Diese Aufgabe wird erfindungsgemäß dadurch gelöst, daß auf der Innenseite jeder Scharscheibe eine in Richtung der Scharscheibe leicht federbelastende Leitplatte angeordnet ist. Mit dieser leicht federbelasteten Leitplatte wird ein Saatzuführraum von den Leitungen bis in die Säfurche geschaffen. Die Leitplatte wird mit einer sehr geringen Federkraft, die ausreichend ist, die Leitplatte sicher an der Scharscheibe anliegend zu halten und andererseits das freie Drehen der Scharscheibe quasi nicht behindert, gegen die Innenseite der Scharscheibe gedrückt.

Um einen Verschleiß an der Leitplatte mit einfachen Mitteln zu vermeiden, ist vorgesehen, daß sich zumindest teilweise auf dem Bereich der Leitplatte, in welchem die Leitplatte die Innenseite der Scharscheibe berührt, ein verschleißfestes Material auf der Leitplatte befindet. Hierdurch kann die Leitplatte aus einem sehr preiswerten Material hergestellt werden, wobei dann durch das verschleißfeste Material eine hohe Lebensdauer der Leitplatte erreicht wird.

Es ist möglich, die Leitplatte aus Metallmaterial oder auch aus Kunststoffmaterial herzustellen.

Weiterhin ist in einer besonderen Ausführungsform vorgesehen, daß die Leitplatte in den Bereichen, mit welchen sie in dem vorderen Bereich der Scharscheibe zur Anlage kommt, ein leicht auswechselbares Verschleißteil aufweist. Hierdurch kann der Haupttragkörper der Leitplatte aus preiswertem Material hergestellt werden und das leicht auswechselbare Verschleiß läßt sich dann sehr einfach bei entsprechenden Verschleiß gegen ein neues austauschen.

Um keine Bewegungen von den Leitungen auf die Leitplatte zu übertragen, ist vorgesehen, daß die Leitungen an an den Scharhaltern angeordneten Halterungen befestigt sind und in einem zwischen der Halterung und dem Leitblech angeordneten flexiblen Leitungselement ausmünden. Hierbei kann das flexible Leitungselement als Faltenbalg ausgebildet sein. Hierdurch wird immer eine leichte federbelastete Anordnung der Leitplatte mit einer sicheren Anlage an der Scharscheibe erreicht, wobei diese Anlage nicht durch Bewegung der Leitungen durch äußere Einflüsse beeinträchtigt wird.

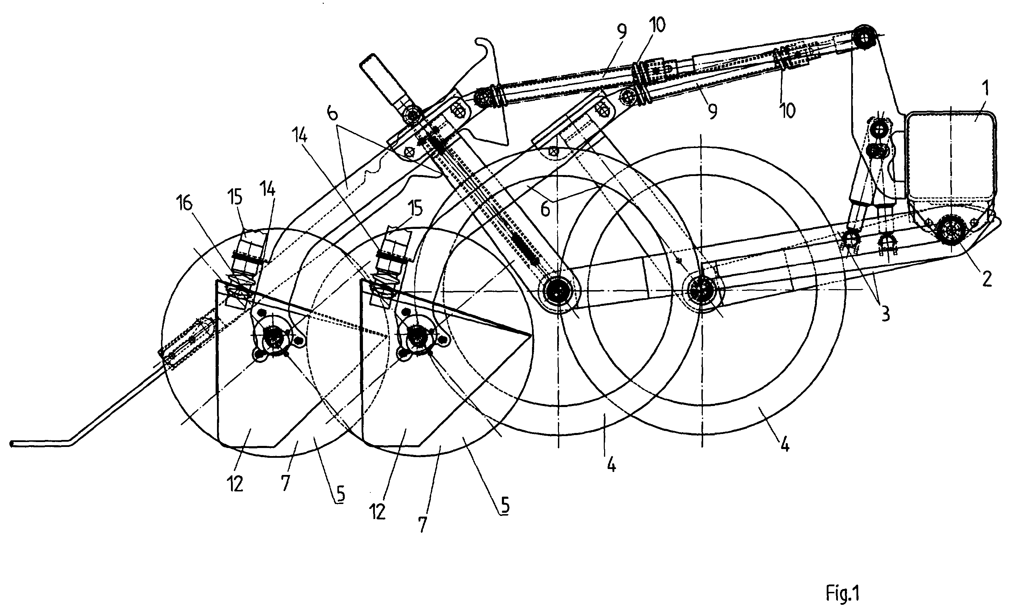

Weitere Einzelheiten der Erfindung sind den übrigen Unteransprüchen, der Bespielsbeschreibung und den Zeichnungen zu entnehmen. Hierbei zeigen
- Fig. 1: die Säschare der Sävorrichtung in Seitenansicht und in Prinzipdarstellung,

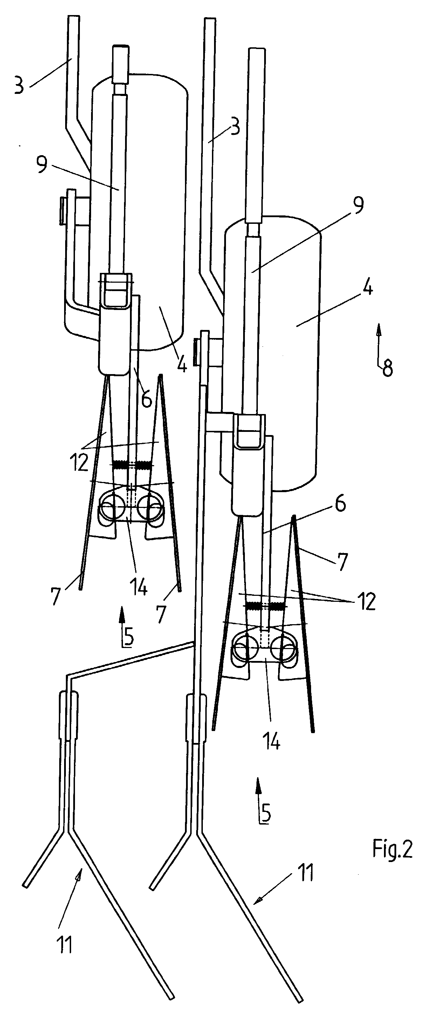

- Fig.2: die Säschare der Sävorrichtung in Draufsicht und in Prinzipdarstellung,

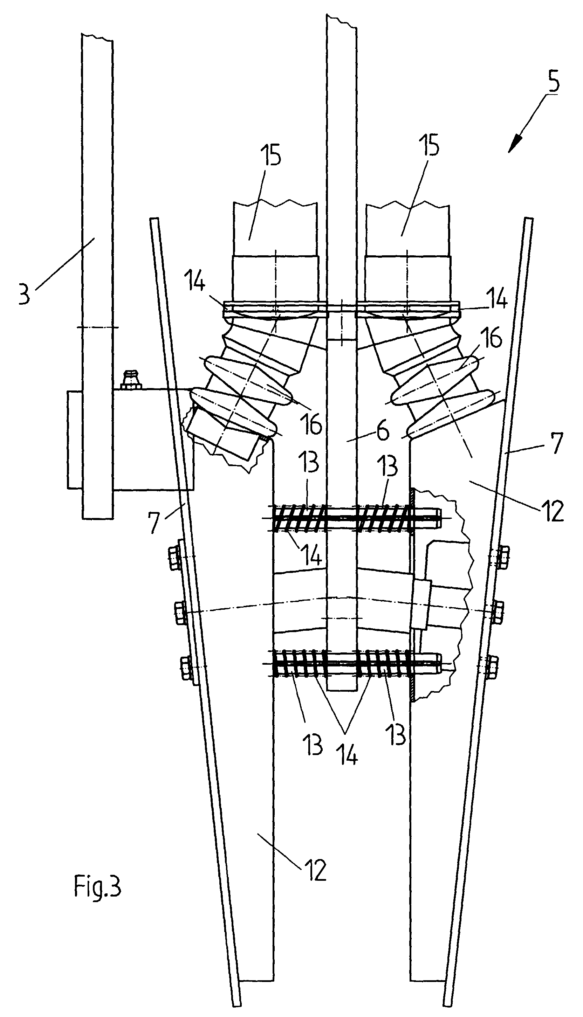

- Fig.3: die Ansicht einer Säschareinheit der Sävorrichtung in der Ansicht von hinten und

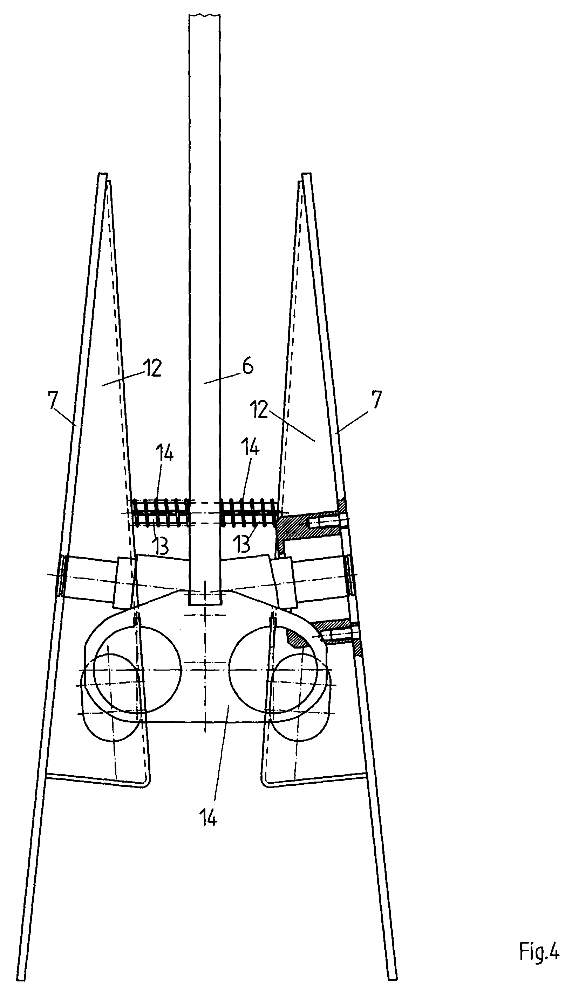

- Fig.4: die Säschareinheit der Sävorrichtung in der Drauf sicht.

An dem Querbalken 1 sind mittels Gelenken 2 über die Scharhalterung 3 die Packerrollen 4 mit den Säscharen 5 in aufrechter Ebene bewegbar angeordnet. Die Halterungen 3, mit denen die Packerräder 4 an dem Querbalken 1 angelenkt sind, sind als Parallelogrammhalterung ausgebildet. An den Halterungen 3, mit denen die Packerrollen 4 angelenkt sind, sind nach hinten rausragende Halteearme 6 gelenkig angeordnet, an denen die als Einscheibensäschare ausgebildeten Säschare 5 drehbar gelagert sind. Die Scharscheiben 7 der Einscheibensäschare sind schräg zur Fahrtrichtung 8 angestellt.

Der obere Lenker 9 der Halterung ist als Teleskopelement mit einer Feder 10 ausgebildet und wirkt so als Steinsicherung, so daß das Säschar 5 gegenüber der Druckrolle 4 nach oben ausweichen kann. Hinter den Säscharen 5 sind die Saatstriegel 11 angeordnet.

Auf der Innenseite der Scharscheibe 7 ist eine in Richtung der Scharscheibe 7 leicht federbelastete Leitplatte 12 mittels der Bolzen 13 angeordnet. Auf den Bolzen 13 sind die Druckfedern 14 angeordnet, die die Leitplatte 12 mit einem leichten Druck gegen die Innenseite der Scharscheibe 7 drücken.

An den Haltearmen 6 der Scharhalterung ist eine Halterung 14 angeordnet, an welcher die von dem Dosierelement kommende Zuleitung 15, die das Saatgut den Säscharen 5 zuführt, angeschlossen. Zwischen dieser Halterung 14 und dem Leitblech 12 ist ein flexibles Leitungselement 16 angeordnet, wobei das flexible Leitungselement 16 als Faltenbalg ausgebildet ist. Hierdurch werden die Bewegungen der Saatgutleitungen 15 nicht auf das Leitelement 12 übertragen, sondern durch das flexible Leitungselement 16 und den Anschluß der Saatgutleitung 15 an der Halterung 14, die fest an dem Scharhalter 6 angeordnet ist, ist die Leitplatte 12 von den Bewegungen der Saatgutleitungen 15 abgekoppelt.

Auf den Bereichen der Leitplatte 12, mit welchen die Leitplatte 12 die Innenseite der Scharscheibe 7 berührt, ist ein verschleißfestes Material auf der Leitplatte 12 angeordnet bzw.aufgebracht, um so einen Verschleiß in diesem Berührungsbereich entgegenzuwirken, damit die Leitplatte 12 eine lange Lebensdauer aufweist. Dieses verschleißfeste Material kann eine Aufpanzerung sein oder auch aus einem Wolfram-Carbid-Plattenelement bestehen. Desweiteren ist es möglich, daß die Leitplatte 12 in den Bereichen, mit welchen sie im vorderen Bereich der Scharscheibe 7 zur Anlage kommt, als leicht auswechselbares Verschleißteil ausgebildet ist, so daß beim Verschleiß des Verschleißteiles dieses leicht gegen ein neues ausgewechselt werden kann.

### [Stand der Technik]

### [Aufgabe der Erfindung]

### [Beispiele]

## Patentansprüche

1. Sävorrichtung mit mehreren Einscheibensäscharen, deren Scharscheiben jeweils schräg zur Fahrtrichtung angestellt sind, und denen mittels Leitungen das auszubringende Material in einstellbaren Mengen zuführbar ist, dadurch gekennzeichnet, daß auf der Innenseite jeder Scharscheibe (7) eine in Richtung der Scharscheibe (7) leicht federbelastete Leitplatte (12) angeordnet ist.

2. Sävorrichtung nach Anspruch 1, dadurch gekennzeichnet, daß sich zumindest teilweise sich auf dem Bereich der Leitplatte (12), mit welchen die Leitplatte (12) die Innenseite der Scharscheibe (7) berührt, ein verschleißfestes Material auf der Leitplatte (12) befindet.

3. Sävorrichtung nach Anspruch 2, dadurch gekennzeichnet, daß das verschleißfeste Material eine Aufpanzerung ist.

4. Sävorrichtung nach Anspruch 2, dadurch gekennzeichnet, daß das verschleißfeste Material als Wolfrahmcarbitplattenelement ausgebildet ist.

5. Sävorrichtung nach einem oder mehreren der vorstehenden Ansprüche, dadurch gekennzeichnet, daß die Leitplatte (12) in den Bereichen, mit welchen sie im vorderen Bereich der Scharscheibe (7) zur Anlage kommt, ein leicht auswechselbares Verschleißteil aufweist.

6. Sävorrichtung nach einem oder mehreren der vorstehenden Ansprüche, dadurch gekennzeichnet, daß die Leitungen (15) an den Scharhaltern (6) angeordneten Halterungen (14) befestigt sind und in einem zwischen der Halterung (14) und dem Leitblech (12) angeordneten flexiblen Leitungselement (16) ausmünden.

7. Sävorrichtung nach Anspruch 6, dadurch gekennzeichnet, daß das flexible Leitungselement (16) als Faltenbalg ausgebildet ist.
